# EUROPEAN PATENT SPECIFICATION

(11) **EP 1 348 618 B1**
(45) Date of publication and mention of the grant of the patent: **06.09.2006**
(21) Application number: 03006837.3
(22) Date of filing: 27.03.2003
(51) Int. Cl.: B62M 25/00, B62M 25/02, F16H 63/14

(54) **Easy shifting transmission**
Getriebe mit einfacher Schaltung
Transmission à changement de vitesse facile

(30) Priority: 28.03.2002 US 367726 P
(43) Date of publication of application: 01.10.2003
(73) Proprietor: BRP-Rotax GmbH & Co. KG, 4623 Gunskirchen (AT)
(72) Inventor: Korenjak, Norbert, 4651 Stadl Paura (AT)
(74) Representative: Patentanwälte Dr. Solf & Zapf

(56) References cited:
- EP-A- 0 869 301
- DE-A- 2 826 040
- DE-C- 907 249
- US-A- 4 491 031

## Description

### CROSS REFERENCE TO RELATED APPLICATIONS

This application claims priority to U.S. Provisional Patent Application No. 60/367,726, which was filed on March 28, 2002.

### BACKGROUND OF THE INVENTION

### 1. Field of the Invention

The present invention relates to a gear selector mechanism for a transmission as used, in particular, in motorcycles and other recreational vehicles such as ATV's, karts, scooters, etc. Most transmissions of this kind have a gear selector drum that manages gear changes by way of selector forks, selector pinions, and dog clutches. The gear selector drum is rotated by a selector pawl that is secured to a selector shaft.

### 2. Description of Related Art

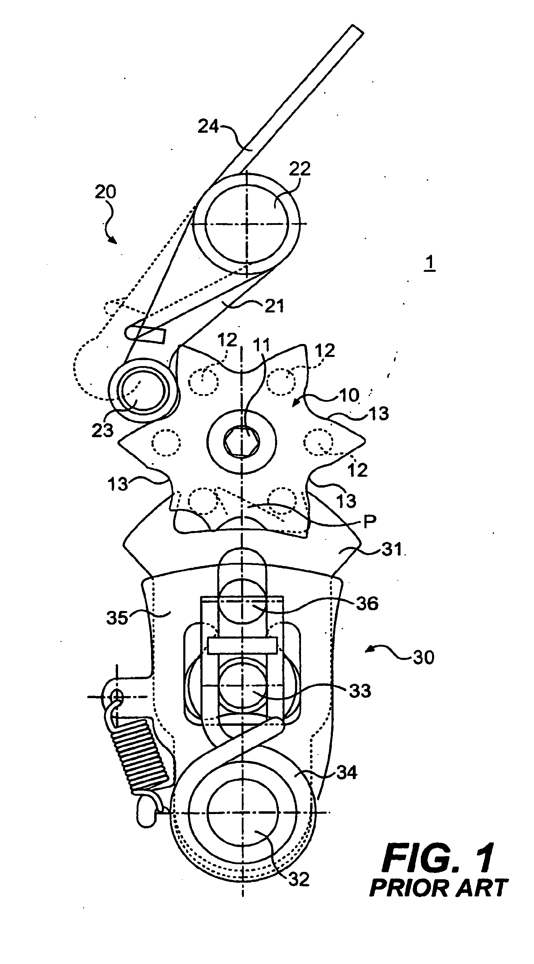

A conventional gear selector mechanism 1 for a transmission is illustrated in Fig. 1. The gear selector mechanism 1 includes an indexing plate 10 that rotates about an axis 11. The indexing plate 10 is secured to one side of a gear selector drum (not shown). The indexing plate 10 includes a plurality of cylindrical indexing pins 12 secured thereto. A plurality of notches 13 are formed in the periphery of the indexing plate 10 between the cylindrical indexing pins 12. The number of notches 13 corresponds to the number of gear positions and the neutral gear position. The gear selector mechanism 1 further includes an indexing lever 20. The indexing lever 20 includes an indexing arm 21 that is pivotally mounted at one end to a housing (not shown) of the transmission through a pivot pin 22. A free end of the indexing arm 21 includes a positioning pin 23. The positioning pin 23 is received within the notches 13. The indexing lever 20 is biased by a spring 24 into the notches 13. The gear selector mechanism 1 also includes a selector 30. The selector 30 includes a selector pawl 31 that is pivotally mounted the housing of the transmission about a selector shaft 32. The selector shaft 32 extends out of the housing and supports a selector lever (not shown). A cylindrical pin 33 is fixed to the housing between the selector shaft 32 and the indexing plate 10. A spring 34 extends around the selector shaft 32 and along the sides of the cylindrical pin 33. The spring 34 holds the selector pawl 31 in a normal position. One end of the selector pawl 31 is adapted to engage the indexing pins 12 and rotate the indexing plate 10 about the axis 11. This is accomplished by the selector pawl 31 pivoting about the axis to a position P, shown in phantom, in Fig. 1. The other end of the selector pawl 31 pivots about the selector shaft 32. In order to pivot the selector pawl 31 when the selector shaft 32 is rotated, a selector lever 35 is provided. The selector lever 35 is connected to the selector shaft 32 such that it rotates therewith. The selector lever 35 supports a selector pin 36. The selector pin 36 moves with the selector lever 35 and is in contact with the spring 34 such that selector pawl 31 and the selector lever 35 return from the position P to the normal position, shown in Fig. 1, under the bias of the spring 34.

Conversion of the pivoting motion of the selector pawl 31 into the rotary motion of the gear selector drum through the indexing plate 10 is effected by the mechanical interaction of the selector pawl 31 and a plurality of cylindrical pins 12. When it is desirable to shift from one gear position into the next gear position, the selector shaft 32 and selector lever 35 are rotated, which causes the selector pawl 31 to pivot. The selector pawl 31 engages the cylindrical pins 12 causing the indexing plate to rotate. This causes the positioning pin 23 of the indexing lever 20 to be lifted out of one particular notch 13 and then pressed into the next notch 13 by a spring 24. This requires a defined selection force that is necessary to complete the gear change. The geometrical relationships of the selector mechanism 1 have proven to be disadvantageous because the selection force that must be applied to complete a gear change is at its maximum at the beginning and the end of the gear-change operation, and is minimal at the time the next gear is engaged. This arrangement reduces the speed at which gear changes can be made, and greatly increase the amount of force that has to be applied to complete such gear change operations.

Another gear selector mechanism is described in US Patent No. 4,510,820 to Tsuboi. In this gear selector mechanism, the transmission of force from the gear change pedal to the gear selector drum using an epicyclic gearing. This gearing greatly increases the cost of a gear selector drum drive.

### OBJECTS OF THE INVENTION

It is an object of the present invention to provide an easy shifting transmission mechanism for a vehicle.

It is another object of the present invention to provide an easy shifting transmission that requires a small amount of force at the beginning of the gear change process.

It is another object of the present invention to provide an easy shifting transmission that engages the next gear as quickly as possible.

It is another object of the present invention to provide an easy shifting transmission having a gear shift plate.

It is another object of the present invention to provide an easy shifting transmission having a gear shift plate that functions in such a way that at the beginning of the gear change process, the point of contact between a selector pawl and the gear shift plate is located at the greatest possible distance from the axis of rotation of the gear selector drum and thereby at the shortest distance from the center of rotation of the selector pawl, so that the force applied by the selector pawl is significantly reduced.

It is another object of the present invention to provide a gear shift mechanism reduces the force required to shift gears.

### SUMMARY OF THE INVENTION

In response to the foregoing challenges, applicants have developed in accordance with claim 1 a novel gear selector mechanism for a transmission for performing a gear shifting operation at reduced forces. The gear selector mechanism includes a selector pawl pivotally mounted about a shaft. The gear selector mechanism also includes a rotatable gear shift plate having a plurality of radially extending teeth extending around a periphery thereof. The gear shift plate replaces prior art cylindrical pins. Each of the plurality of teeth having an outer tip and an inner base portion. At least a portion of the selector pawl is adapted to selectively engage at least one of the teeth during the gear shifting operation. The selector pawl engages one of the plurality of teeth in an area adjacent the outer tip at a beginning of the gear shifting operation. The gear shift plate functions in such a way that at the beginning of the gear change process the point of contact between the selector pawl and the gear shift plate is located at the greatest possible distance from the center of rotation of the gear selector drum and thereby at the shortest distance from the center of rotation of the selector pawl. Thus, the selection force at the selector pawl is significantly reduced as compared to the prior art selector mechanisms. In the middle position, where one gear has just been released and the next gear has not yet been selected, the relationship of the forces is similar to that in the prior art system described above.

The selector pawl further engages one of the plurality of teeth in an area adjacent the inner base portion at the end of the gear shift operation. The point at which force is applied at the end of the gear shift operation is thus located at the minimal distance from the center of rotation of the gear selector drum and thus at the greatest possible distance from the selector pawl, so that a transition from the selector pawl to the gear selector drum takes place very quickly. Thus, gear shift operations can be completed as rapidly as possible.

The gear selector mechanism in accordance with the present invention further includes a rotatable indexing plate having a plurality of recesses formed in an outer periphery thereof. Each of the plurality of recesses corresponds to one of a neutral position and a plurality of gear positions. The rotatable gear shift plate and the rotatable indexing plate may rotate about a common axis. The rotatable indexing plate and the rotatable gear shift plate are arranged such that each recess has a pair of the teeth positioned on opposing sides of the recess. The gear selector mechanism in accordance with the present invention further includes a pivoting indexing lever. The indexing lever is adapted to be positioned in one of the plurality of recesses at the completion of the gear changing operation.

The selector pawl may include a pair of fingers. The pair of fingers are arranged on the selector pawl such the fingers are located on opposing sides of two adjacent teeth in an inoperative position or normal position. One of the fingers engages one tooth in the area adjacent the outer tip at a beginning of the gear shifting operation. The finger engages the one tooth in the area adjacent the inner base portion at the end of the gear shift operation. The arrangement helps achieve the reduction in selection force.

In accordance with the present invention, the gear selector mechanism includes a selector shaft. The selector pawl may be pivotably and slidably mounted to the selector shaft. It is contemplated that the selector pawl pivots about the selector shaft during the gear changing operation. The selector pawl pivots about the shaft and slides a predetermined distance at the conclusion of the gear changing operation such that selector pawl returns to the initial position or inoperative position. In accordance with the present invention, each finger includes a surface adapted to contact one of the teeth at the completion of the gear change operation as the selector pawl returns to the initial position. The contact between the surface and the one tooth causes the selector pawl to slide a predetermined distance away from the selector shaft. The gear selection mechanism may further include at least one spring operatively coupled to the selector pawl for returning the selector pawl to the initial position at the completion of the gear change operation.

### BRIEF DESCRIPTION OF THE DRAWINGS

The invention will be described in conjunction with the following drawings in which like reference numerals designate like elements and wherein:

Fig. 1 is an enlarged side view of a gear selector mechanism as described in the prior art;

Fig. 2 is an enlarged side view of a gear selector mechanism in accordance with a first embodiment of the present invention, wherein the gear selector mechanism is illustrated in a position at the beginning of a gear shift operation;

Fig. 3 is an enlarged side view of the gear selector mechanism of Fig. 2, wherein the gear selector mechanism is illustrated in a position at the end of the gear shift operation;

Fig. 4 is an enlarged side view of a gear selector mechanism according to a second embodiment of the present invention;

Fig. 5 is an enlarged side view of the gear selector mechanism of Fig. 4, wherein the gear selector mechanism is illustrated in a position at the beginning of a gear shift operation;

Fig. 6 is an enlarged side view of the gear selector mechanism of Fig. 4, wherein the gear selector mechanism is illustrated in a position at the end of the gear shift operation;

Fig. 7 is an enlarged side view of a gear selector mechanism in accordance with a third embodiment of the present invention, wherein the gear selector mechanism is illustrated in a position at the beginning of a gear shift operation;

Fig. 8 is an enlarged side view of the gear selector mechanism of Fig. 7, wherein the gear selector mechanism is illustrated in a position at the end of the gear shift operation;

Fig. 9 is an enlarged side view of a gear selector mechanism in accordance with a fourth embodiment of the present invention, wherein the gear selector mechanism is illustrated in a position at the beginning of a gear shift operation; and

Fig. 10 is an enlarged side view of the gear selector mechanism of Fig. 7, wherein the gear selector mechanism is illustrated in a position at the end of the gear shift operation.

### DETAILED DESCRIPTION OF PREFERRED EMBODIMENTS

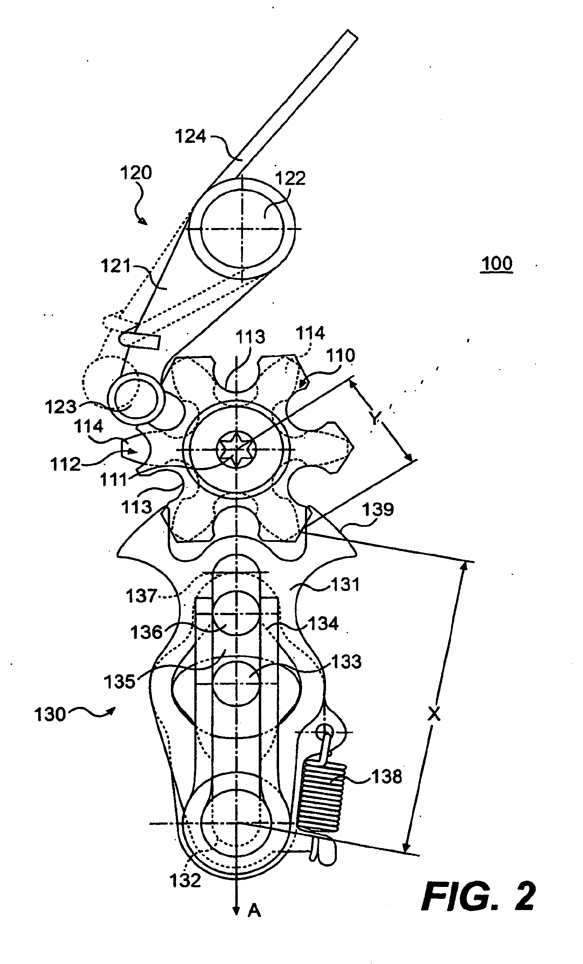

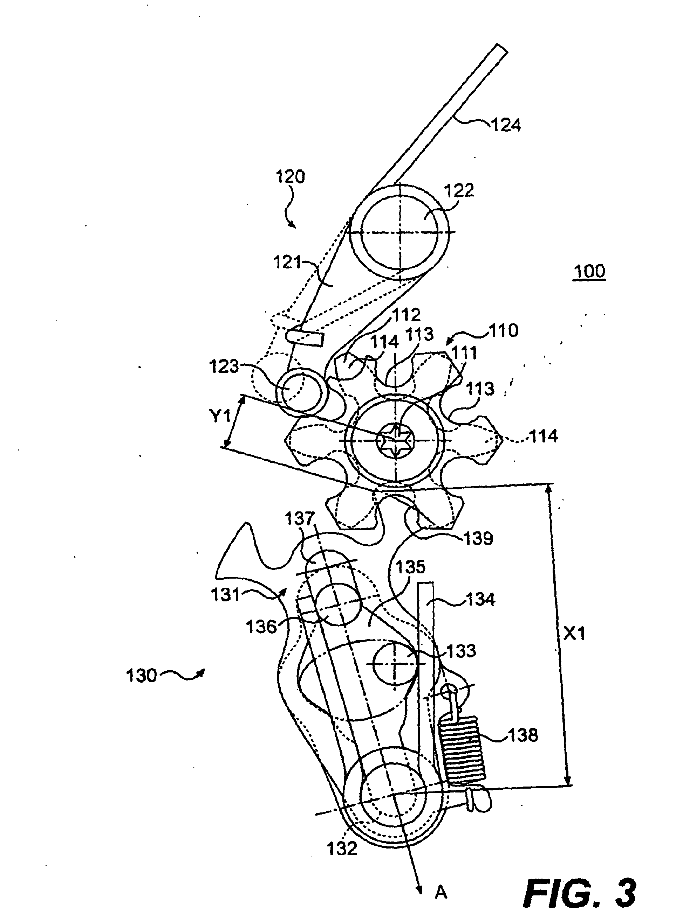

A gear selector mechanism 100 for a transmission in accordance with one embodiment of the present invention is illustrated in Figs. 2 and 3. The gear selector mechanism 100 includes an indexing plate 110 that rotates about an axis 111. The indexing plate 110 is secured to one side of a gear selector drum (not shown). The indexing plate 110 includes a gear shift plate 112 secured thereto. The gear shift plate 112 and the indexing plate 110 rotate about the axis 111. A plurality of notches 113 are formed in the periphery of the indexing plate 110. The number of notches 113 corresponds to the number of gear positions and the neutral gear position. The gear shift plate 112 resembles a gear wheel and includes a plurality of indexing teeth 114. The indexing teeth 114 are positioned between each of the notches 113, as shown in Figs. 2 and 3.

Since the gear shift plate 112 is attached to the indexing plate 110, the indexing plate 110 increases the sturdiness of the plate 112. The gear shift plate 112 may be stamped from metal or formed from an inexpensive sintered metal part.

The gear selector mechanism 100 further includes an indexing lever 120. The indexing lever 120 includes an indexing arm 121 that is pivotally mounted at one end to a housing (not shown) of the transmission through a pivot pin 122. A free end of the indexing arm 121 includes a positioning pin 123. The positioning pin 123 is received within the notches 113. The indexing lever 120 is radially biased by a spring 124 into the notches 113. The positioning pin 123 is located in one of the notches 113 in the neutral position and the defined gear positions. The positioning pin 123 and the notches 113 define the predetermined positions of the indexing plate 110 for the individual gears, and thereby define an angle between two adjacent notches 113 through which the indexing plate 110 must be rotated in order to shift from one gear to another. During the gear shift operation described below, the indexing plate 110 is rotated about the axis 111 through an angle subtended by two notches 113.

The gear selector mechanism 100 also includes a selector 130. The selector 130 includes a selector pawl 131 that is pivotally mounted the housing of the transmission about a selector shaft 132. The selector shaft 132 extends out of the housing. The force necessary to operate the gear selector mechanism 100 is provided through the selector shaft 132. The selector shaft 132 is operatively coupled to an external assembly such as a manually operated foot shift mechanism (not shown) such that the force applied by a driver's foot is transferred by the selector shaft 132 to operate the gear selector mechanism 100. The present invention, however, is not to be limited to solely a foot driven shaft mechanism; rather, other mechanically driven assemblies are considered to be well within the scope of the present invention. It is further contemplated that the selector shaft 132 may be rotated by an automatic shifting mechanism that may be operated by an electric motor or suitable electromagnetic device that is capable of rotating the selector shaft 132. A cylindrical pin 133 is fixed to the housing between the selector shaft 132 and the indexing plate 110. A spring 134 extends around the selector shaft 132 and along the sides of the cylindrical pin 133. The spring 134 holds the selector pawl 131 in a normal position. The spring 134 is preferably a hairpin spring having legs located on opposing sides of the cylindrical pin 133. The present invention, however, is not limited to the use of hairpin springs; rather, other springs that are capable of returning the selector pawl 131 are considered to be well within the scope of the present invention.

The selector pawl 131 may be forked at both ends. One end of the selector pawl 131 is adapted to engage the indexing teeth 114 and rotate the indexing plate 110 and the gear shift plate 112 about the axis 111. This is accomplished by the selector pawl 131 pivoting about the axis from the position shown in Fig. 2 to the position shown in Fig. 3. The other forked end of the selector pawl 131 pivots about the selector shaft 132. It is not necessary for this end of the selector pawl 131 to have a forked construction; rather, any construction that permits the selector pawl 131 to pivot about the selector shaft 132 and move in the direction A is considered to be well within the scope of the present invention. For example, a slot may be provided In order to pivot the selector pawl 131 when the selector shaft 132 is rotated, a selector lever 135 is provided. The selector lever 135 is connected to the selector shaft 132 such that it rotates therewith. The selector lever 135 supports a selector pin 136. Free ends of the spring 134 are located on opposing sides of the selector pin 136. The selector pin 136 is slidably received within a groove 137 formed in the selector pawl 131. The selector pin 136 moves with the selector lever 135 and is in contact with the spring 134 such that selector pawl 131 and the selector lever 135 return from the position, shown in Fig. 3 to the normal position, shown in Fig. 2, under the bias of the spring 134. The selector pawl 131 is supported so as to be able to slide in the direction indicated by the arrow A and thus radially with respect to the axis of the selector shaft 132 against the resistance of a spring 138, and thereby be adjustable relative to the lever arm 120.

The start of the gear shift operation is shown in Fig. 2. The selector pawl 131 is held in its normal position by the spring 134 and the spring 138. At the start of the gear shift operation, the point of contact between the selector pawl 131 and the gear shift plate 112 is in the area of the tip of one indexing tooth 114. With this arrangement, at the start of the gear shift operation, the point of application of force is at the greatest possible distance Y from the center of rotation of the gear shift plate 112, and thus from the gear selector drum. This arrangement results in a minimal lever arm X for the selector pawl 131. As such, the shifting moment that is required on the selector shaft 132 is reduced at the start of the gear shift operation. The selector pawl 131 can pivot in either a clockwise direction or a counter clockwise direction based upon the direction of rotation of the selector shaft 132.

The end of the gear shift operation is shown in Fig. 3. At the end of the gear shift operation, the selector pawl 131 and the selector lever 135 have been rotated out of its normal position. At the end of the gear shift operation, the point of contact between the selector pawl 131 and the gear shift plate 112 is in the area of the foot of one of the indexing teeth 117. With this positioning, the selector pawl 131 is located closer to the center of rotation of the gear shift plate 112. This increases the speed in which the gear shift plate 112 and the selector pawl 131 move with respect to each other. This has a positive effect in that a gear change is completed more rapidly. Engagement of the next gear is facilitated when the pivot pin 122 is pressed into one of the notches 113 by the spring 124. The indexing lever 120 helps define the conclusion of the gear shift operation precisely. Once the gear shift operation has been concluded, the hairpin spring 134 moves the selector pawl 131 back into its normal position, as shown in Fig. 2. When this occurs, a back portion 139 of the selector pawl 131 rests on the gear shift plate 112, whereupon the selector pawl 131 moves out of the way of the gear shift plate 112 as it pivots back into its normal position in the direction indicated by the arrow A, against the resistance of the spring 138.

Unlike the prior art, there is no need to apply a greater amount of force at the end of the gear shift operation. In accordance with the present invention, the above described arrangement makes it possible to achieve a significant reduction in the force that has to be applied in order to shift gears, while using a similar indexing lever, similar gear shift travel, and a similar spring.

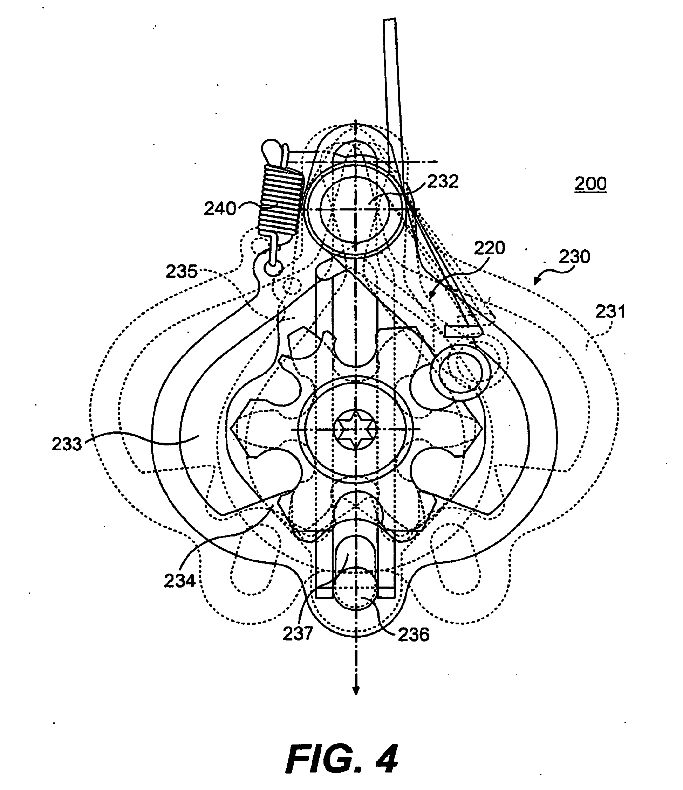

A gear selector mechanism 200 for a transmission in accordance with another embodiment of the present invention illustrated in Figs. 4-6 will now be described in greater detail. Like the gear selector mechanism 100, the gear selector mechanism 200 includes an indexing plate 110 and gear shift plate 112, as described above. The gear selector mechanism 200 further includes an indexing lever 220. The indexing lever 220 includes an indexing arm 221 that is pivotally mounted at one end to a housing (not shown) of the transmission through a selector shaft 232. The indexing arm 221 and the selector pawl 231, described below, both rotate about the selector shaft 232. A free end of the indexing arm 221 includes a positioning pin 223. The positioning pin 223 is received within the notches 113. The indexing lever 220 is radially biased by a spring 224 into the notches 113. The positioning pin 223 is located in one of the notches 113 in the neutral position and the defined gear positions.

The gear selector mechanism 200 also includes a selector 230. The selector 230 includes a selector pawl 231 that is pivotally mounted the housing of the transmission about a selector shaft 232. The selector shaft 232 extends out of the housing and supports a selector lever (not shown). The selector pawl 231 has an opening 233 formed in an interior portion. The indexing plate 110 and the gear shift plate 112 rotate about the axis 111 within the opening 233. The indexing plate 110 remains within the opening 233 as the selector pawl 231 pivots during the gear changing operation. The selector pawl 231 includes a pair of fingers 234 are adapted to engage the teeth 114 of the gear shift plate 112. With this arrangement, the distance between the gear selector drum and the selector shaft 232 is even shorter than the embodiment of Figs. 2 and 3. This arrangement also reduces the space required for the transmission. The selector pawl 231 can pivot in either a clockwise direction or a counter clockwise direction based upon the direction of rotation of the selector shaft 232. The range of motion of the selector pawl 231 is illustrated in phantom in Fig. 4.

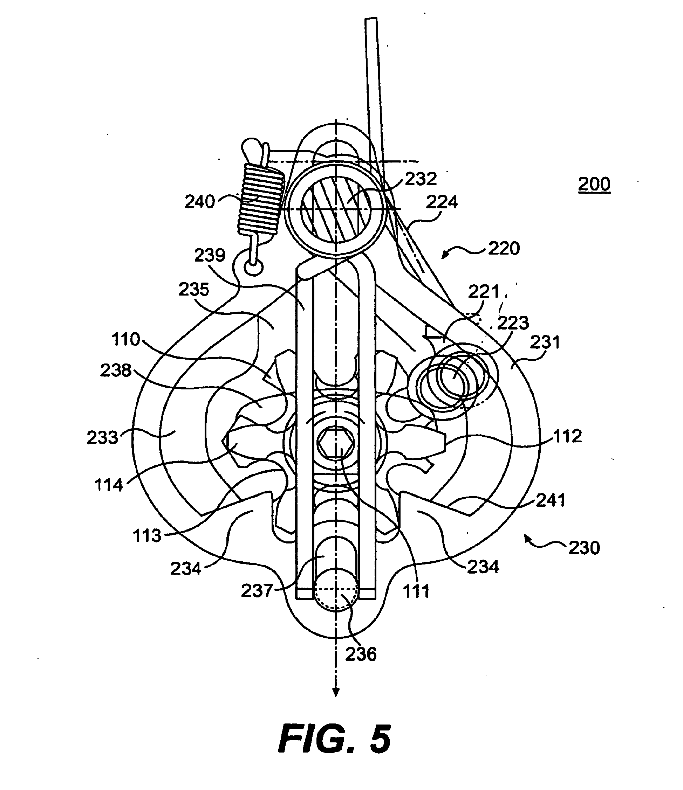

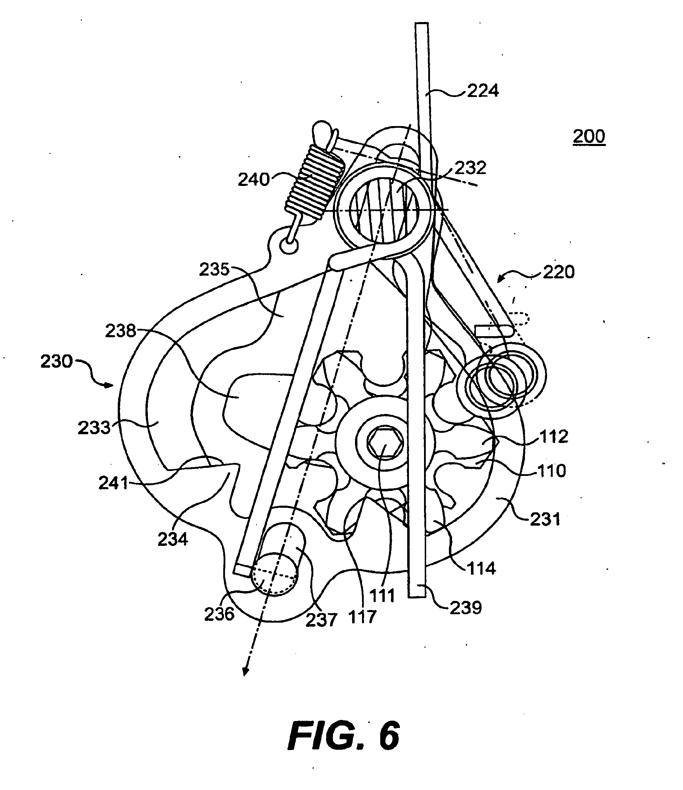

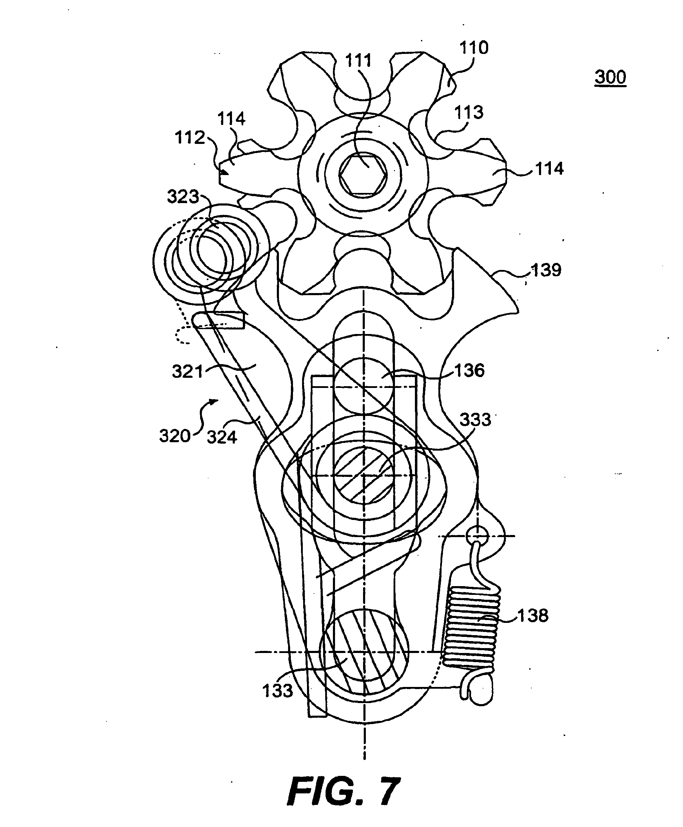

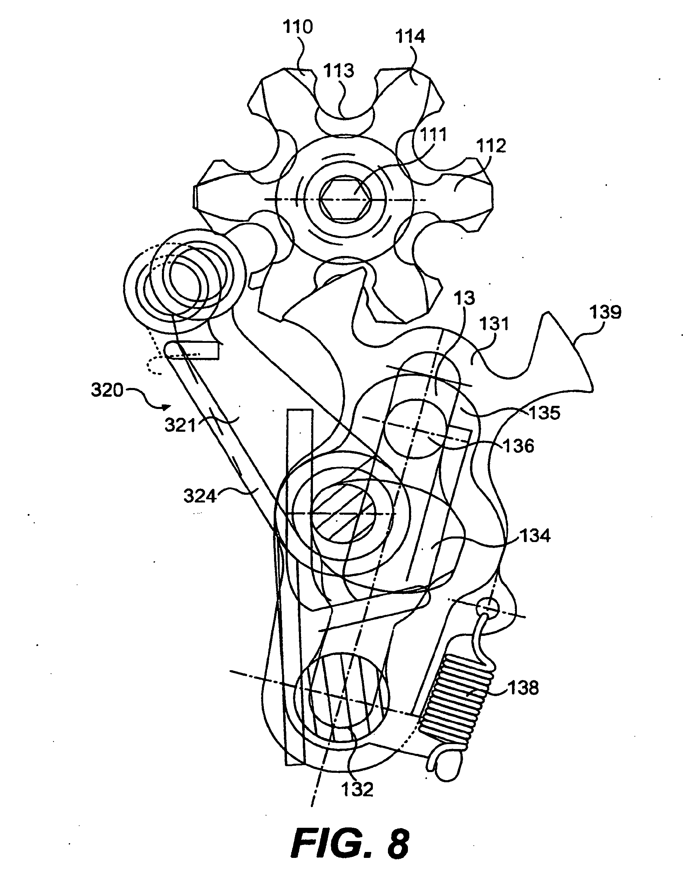

In order to pivot the selector pawl 231 when the selector shaft 232 is rotated, a selector lever 235 is provided. The selector lever 235 is connected to the selector shaft 232 such that it rotates therewith. The selector lever 235 supports a selector pin 236. The selector pin 236 is slidably received within a groove 237 formed in the selector pawl 231. The selector pawl 231 is mounted on a selector shaft 232 so as to be able to slide in the direction indicated by the arrow A1 and thus be adjustable. The selector pin 236 moves with the selector lever 235. The selector lever 235 also includes an opening 238 formed therein. The shaft of the axis 111 is received within the opening 238, such that the selector pawl 231 and the selector lever 235 can rotate to the positions shown in Figs. 4 and 6. A return spring 238 is received on the selector shaft 232. As shown in Fig. 5, the return spring 239 includes legs that extend on opposing sides of the axis 111. The spring 239 also contacts the selector pin 236.

The start of the gear shift operation is shown in Fig. 5. The selector pawl 231 is held in its normal position by the spring 239 and the spring 240. At the start of the gear shift operation, the point of contact between the selector pawl 131 and the gear shift plate 112 is in the area of the tip of one indexing tooth 114. Like the embodiment of Figs. 2 and 3, at the start of the gear shift operation, the point of application of force is at the greatest possible distance from the center of rotation of the gear shift plate 112, and thus from the gear selector drum. This arrangement results in a minimal lever arm for the selector pawl 231. As such, the shifting moment that is required on the selector shaft 132 is reduced at the start of the gear shift operation.

The end of the gear shift operation is shown in Fig. 6. At the end of the gear shift operation, the selector pawl 231 and the selector lever 235 have been rotated out of its normal position. At the end of the gear shift operation, the point of contact between the selector pawl 231 and the gear shift plate 112 is in the area between the fingers 234 and a foot of one of the indexing teeth 117, as shown in Fig. 6. With this positioning, the selector pawl 131 is located closer to the center of rotation of the gear shift plate 112. Engagement of the next gear is facilitated when the positioning pin 223 is pressed into one of the notches 113 by the spring 224. The indexing lever 220 helps define the conclusion of the gear shift operation precisely. Once the gear shift operation has been concluded, the spring 238 moves the selector pawl 231 back into its normal position, as shown in Fig. 5. When this occurs, a back portion 241 of the selector pawl 231 rests on the gear shift plate 112, whereupon the selector pawl 231 moves out of the way of the gear shift plate 112 as it pivots back into its normal position in the direction indicated by the arrow A1, against the resistance of the spring 240.

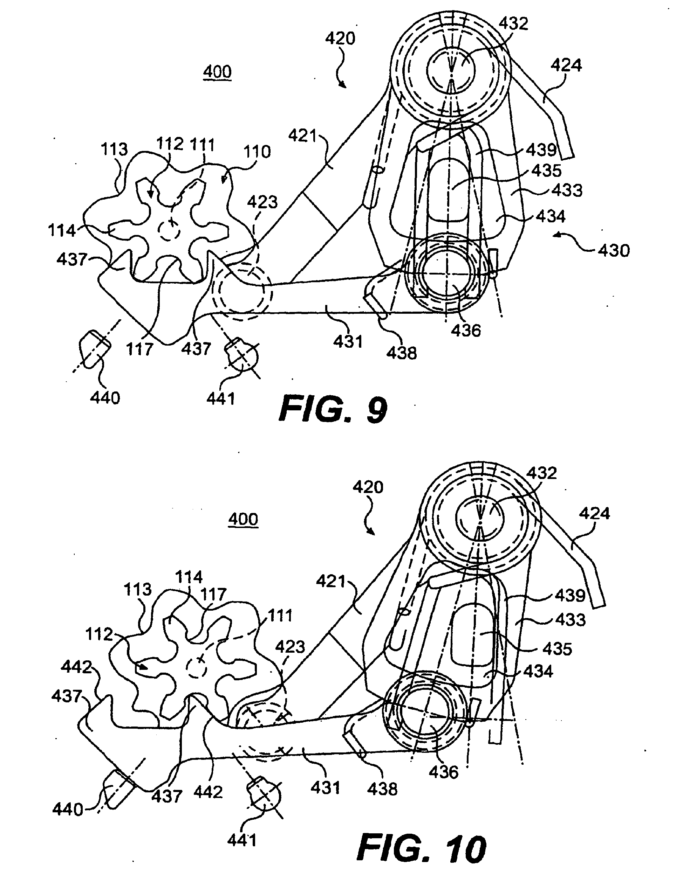

A gear selector mechanism 300 for a transmission in accordance with another embodiment of the present invention illustrated in Figs. 7 and 8 will now be described in greater detail. The gear selector mechanism 300 has a construction similar to the gear selector mechanism 100, described above. For the sake of brevity, the description of the common shared components will not be duplicated. The gear selector mechanism 300 includes a cylindrical pin 333. The cylindrical pin 333 performs substantially the same function as the cylindrical pin 133, described above. In the embodiment illustrated in Figs. 7 and 8, an indexing lever 320 is also pivotally mounted to the cylindrical pin 333. The indexing lever 320 includes an indexing arm 321 that is pivotally mounted at one end to the cylindrical pin 333. A free end of the indexing arm 321 includes a positioning pin 323. The positioning pin 323 is biased into the notches 113 by spring 324 in the manner described above in connection with the selector mechanism 100. The gear selector mechanism 300 operates in substantially the same manner, as the selector mechanism 100.

A gear selector mechanism 400 for a transmission in accordance with another embodiment of the present invention illustrated in Figs. 9 and 10 will now be described in greater detail. Like the gear selector mechanisms 100, 200 and 300, the gear selector mechanism 400 includes an indexing plate 110 and gear shift plate 112 having the construction described above.

The gear selector mechanism 400 further includes an indexing lever 420. The indexing lever 420 includes an indexing arm 421 that is pivotally mounted at one end to a housing (not shown) of the transmission through a selector shaft 432. The selector 430 described below is also attached to the selector shaft 432. A free end of the indexing arm 421 includes a positioning pin 423. The positioning pin 423 is received within the notches 113. The indexing lever 420 is radially biased by a spring 424 into the notches 113. The positioning pin 423 is located in one of the notches 113 in the neutral position and the defined gear positions.

The gear selector mechanism 400 also includes a selector 430. The selector 130 includes a selector pawl 431 that is pivotally mounted to one end of a selector lever 433. One end of the selector lever 433 is pivotally mounted to the selector shaft 432. The selector lever 433 includes a central opening 434 formed therein. A stop 435 is positioned within the opening 434. The stop 435 is mounted to the housing of the transmission. An opposite end of the selector lever 433 includes a selector pin 436 mounted thereon. The selector pawl 431 is pivotally mounted at one end to the selector pin 436. An opposite end of the selector pawl 431 includes a pair of fingers 437. The fingers 437 are adapted to engage the indexing teeth 114 and rotate the indexing plate 110 and the gear shift plate 112 about the axis 111. A spring 438 is operatively connected to the selector lever 433 and the selector pawl 431 to bias the selector pawl 431 into contact with the gear shift plate 112, as shown in Fig. 9. A spring 439 extends around the selector shaft 432 and along opposing sides of the stop 435 and the selector pin 436. The spring 439 provides the return force to return the selector 430 to the normal position, shown in Fig. 9, at the completion of the gear change operation.

The start of the gear shift operation is shown in Fig. 9. The selector pawl 431 is held in its normal position by the spring 438 and the spring 439. As the selector shaft 432 is rotated, the selector lever 433 is pivoted, this causes the selector pawl 431 to move a direction substantially transverse to the axis of the selector lever 433. With this arrangement, one of the pair of fingers 437 engages one of the teeth 114 to rotate the gear shift plate 112. The finger 437 that engages the teeth 114 is determined based upon the rotation of the selector shaft 432. When the selector shaft 432 is pivoted in a clock-wise direction, the inner finger 437 engages one of the teeth 114, as shown in Fig. 10, which causes the gear shift plate 112 to rotate in a clock-wise direction. When the selector shaft 432 is pivoted in a counter clock-wise direction, the outer finger 437 engages one of the teeth 114, which causes the gear shift plate 112 to rotate in a counter clock-wise direction. Stops 440 and 441 are provided to limit the range of motion of the selector pawl 431. At the start of the gear shift operation, the point of contact between the selector pawl 431 and the gear shift plate 112 is in the area of the tip of one indexing tooth 114.

The end of the gear shift operation is shown in Fig. 11. At the end of the gear shift operation, the selector pawl 431 and the selector lever 433 have been rotated out of its normal position. At the end of the gear shift operation, the point of contact between the selector pawl 431 and the gear shift plate 112 is in the area of the foot of one of the indexing teeth 117. With this positioning, the selector pawl 431 is located closer to the center of rotation of the gear shift plate 112. This increases the speed in which the gear shift plate 112 and the selector pawl 431 move with respect to each other. This has a positive effect in that a gear change is completed more rapidly.

Engagement of the next gear is facilitated when the pin 423 is pressed into one of the notches 113 by the spring 424. The indexing lever 420 helps define the conclusion of the gear shift operation precisely. Once the gear shift operation has been concluded, the spring 438 moves the selector lever 433 back into its normal position, as shown in Fig. 9. When this occurs, a back portion 442 of the fingers 437 rests on the gear shift plate 112, whereupon the selector pawl 431 moves out of the way of the gear shift plate 112 against the resistance of the spring 439.

While the invention has been described in connection with what is presently considered to be the most practical and preferred embodiments, it is to be understood that the invention is not to be limited to the disclosed embodiments and elements, but, to the contrary, is intended to cover various modifications, combinations of features, equivalent arrangements, and equivalent elements included within the scope of the appended claims. For example, the present invention has been described in connection with a transmission for use in motorcycles and other recreational vehicles. The present invention has broad application and it is intended that it may be used any mechanical assembly that requires the shifting between gear positions whereby the inclusion of the gear shift plate can lead to an overall reduction in the force necessary to shift from one gear position to another. Furthermore, the size of the various components that may appear in the drawings can vary from the size that may be portrayed in the figures herein. Thus, it is intended that the present invention covers the modifications and variations of the invention, provided they come within the scope of the appended claims and their equivalents.

## Claims

1. A gear selector mechanism (100) for performing a gear shifting operation comprising:
an indexing mechanism,
a selector pawl (131) pivotally mounted about a selector shaft (132); and
**characterized by**
a rotatable gear shift plate (112) having a plurality of radially extending teeth extending around a periphery thereof, wherein each of the plurality of teeth (114) having an outer tip and an inner base portion, wherein at least a portion of the selector pawl (131) is adapted to selectively engage at least one of the plurality of teeth (114) during the gear shifting operation, the selector pawl (131) engages one of the plurality of teeth in an area adjacent the outer tip at a beginning of the gear shifting operation and the selector pawl engages one of the plurality of teeth (114) in an area adjacent the inner base portion at the end of the gear shift operation.

2. The gear selector mechanism according to claim 1, wherein said
indexing mechanism comprises a rotatable indexing plate (110), the indexing plate having a plurality of recesses (113) formed in an outer periphery thereof, wherein each of the plurality of recesses corresponds to one of a neutral position and a plurality of gear positions, wherein the rotatable gear shift plate (112) and the rotatable indexing plate (110) rotate about a common axis (111), wherein the rotatable indexing plate and the rotatable gear shift plate are arranged such that each recess (113) has a pair of the teeth positioned on opposing sides of the recess.

3. The gear selector mechanism according to claim 1 or 2, further comprising:
a pivoting indexing lever (120), wherein the indexing lever is positioned in one of the plurality of recesses at the completion of the gear changing operation.

4. The gear selector mechanism according to one of claims I to 3, wherein the selector pawl (131) includes a pair of fingers (234), wherein the pair of fingers are arranged on the selector pawl such the fingers are located on opposing sides of two adjacent teeth in an inoperative position.

5. The gear selector mechanism according to claim 4, wherein one of the fingers (234) engages one tooth (114) of the plurality of teeth in the area adjacent the outer tip at a beginning of the gear shifting operation and the finger engages the one tooth in the area adjacent the inner base portion at the end of the gear shift operation.

6. The gear selector mechanism according to one of claims 1 to 5, wherein the selector pawl (131) is pivotably and slidably mounted to the selector shaft (132).

7. The gear selector mechanism according to claim 6, wherein the selector pawl (131) pivots about the selector shaft (132) during the gear changing operation, wherein the selector pawl pivots and slides a predetermined distance at the completion of the gear changing operation such that selector pawl returns to an initial position.

8. The gear selector mechanism according to claim 6 or 7, wherein the selector pawl (231) includes a pair of fingers (234), wherein each of the fingers includes a surface adapted to contact one of the teeth at the completion of the gear change operation as the selector pawl returns to the initial position, wherein the contact between the surface and the one tooth causes the selector pawl to slide a predetermined distance away from the selector shaft.

9. The gear selector mechanism according to claim 7 or 8, further comprising:
at least one spring (134) operatively coupled to the selector pawl (131) for returning the selector pawl to the initial position at the completion of the gear change operation.

10. The gear selector mechanism according to one of claims 1 to 9, wherein the selector pawl (231) includes an opening (233) formed therein, wherein the rotatable gear shift plate is positioned within the opening.

11. The gear selector mechanism according to claim 10, wherein the selector pawl (232) includes a pair of fingers (234), wherein the pair of fingers are arranged on the selector pawl such the fingers are located on opposing sides of two adjacent teeth in an inoperative position, wherein the pair of fingers extend into the opening (233).

12. The gear selector mechanism according to one of claims 1 to 11, wherein the gear shift (112) plate is formed from metal, preferably from sintered metal.

13. The gear selector mechanism according to one of claims I to 12, wherein the selector shaft (132) comprises a longitudinal axis, and wherein at least a part of the selector pawl (131) is movable with respect to the selector shaft (132) in a direction being at least partially perpendicular to the longitudinal axis of the shaft.

14. The gear selector mechanism according to one of claims 1 to 8, wherein the selector shaft (132) comprises a longitudinal axis, and wherein at least a part of the selector pawl (131) is movable with respect to the selector shaft (132) in a direction being at least partially perpendicular to the longitudinal axis of the shaft and wherein the movement of the selector pawl (131) with respect to the selector shaft (132) is biased by at least one spring.

## Patentansprüche

1. Gangwahlmechanismus (100) zum Durchführen eines Gangwechselvorgangs, umfassend:
einem Indizierungsmechanismus,
eine Schaltklinke (131), die drehend um eine Schaltwelle (132) befestigt ist; und **gekennzeichnet durch**
eine drehbare Gangwechselplatte (112), die mehrere sich radial erstreckende Zähne aufweist, die sich um einen Umfang davon erstrecken, wobei jeder dieser mehreren Zähne (114) eine Außenspitze und einen Innenbasisabschnitt aufweist, wobei mindestens ein Abschnitt der Schaltklinke (131) geeignet ist, selektiv in mindestens einen der mehreren Zähne (114) während des Gangwechselvorgangs einzugreifen, wobei die Schaltklinke (131) in einen der mehreren Zähne in einem Bereich eingreift, der an einem Beginn des Gangwechselvorgangs zur Außenspitze benachbart ist, und wobei die Schaltklinke in einen der mehreren Zähne (114) in einem Bereich eingreift, der zu dem Innenbasisabschnitt am Ende des Gangwechselvorgangs benachbart ist.

2. Gangwechselmechanismus nach Anspruch 1, wobei der Indizierungsmechanismus eine drehbare Indizierungsplatte (110) umfasst, welche mehrere Vertiefungen (113) aufweist, die in einem Außenumfang davon ausgebildet sind, wobei jede der mehreren Vertiefungen entweder einer neutralen Position oder einer von mehreren Gangpositionen entspricht, wobei die drehbare Gangwechselplatte (112) und die drehbare Indizierungsplatte (110) sich um eine gemeinsame Achse (111) drehen, wobei die drehbare Indizierungsplatte und die drehbare Gangwechselplatte derart angeordnet sind, dass jeder Vertiefung (113) ein Paar Zähne zugeordnet sind, die auf gegenüberliegenden Seiten der Vertiefung angeordnet sind.

3. Gangwechselmechanismus nach Anspruch 1 oder 2, welcher ferner Folgendes umfasst:
einen drehenden Indizierungshebel (120), wobei der Indizierungshebel in einer der mehreren Vertiefungen beim Abschluss des Gangwechselvorgangs angeordnet ist.

4. Gangwechselmechanismus nach einem der Ansprüche 1 bis 3, wobei die Schaltklinke (131) ein Paar Finger (234) aufweist, wobei das Paar Finger auf der Schaltklinke derart angeordnet ist, dass sich die Finger auf gegenüberliegenden Seiten von zwei benachbarten Zähnen in einer Ruhestellung befinden.

5. Gangwahlmechanismus nach Anspruch 4, wobei einer der Finger (234) zu einem Beginn des Gangwechselvorgangs in einen Zahn (114) der mehreren Zähne in dem Bereich eingreift, der zur Außenspitze benachbart ist, und der Finger am Ende des Gangwechselvorgangs in den einen Zahn in dem Bereich eingreift, welcher zum Innenbasisabschnitt benachbart ist.

6. Gangwahlmechanismus nach einem der Ansprüche 1 bis 5, wobei die Schaltklinke (131) drehbar und gleitend an der Schaltwelle (132) befestigt ist.

7. Gangwahlmechanismus nach Anspruch 6, wobei sich die Schaltklinke (131) um die Schaltwelle (132) während des Gangwechselvorgangs dreht, wobei sich die Schaltklinke beim Abschluss des Gangwechselvorgangs jeweils um einen vorbestimmten Abstand dreht und um einen vorbestimmten Abstand gleitet, so dass die Schaltklinke zu ihrer Ausgangsposition zurückkehrt.

8. Gangwahlmechanismus nach Anspruch 6 oder 7, wobei die Schaltklinke (231) ein Paar Finger (234) aufweist, wobei jeder der Finger eine Oberfläche aufweist, die geeignet ist, einen der Zähne bei Abschluss des Gangwechselvorgangs zu berühren, während die Schaltklinke in die Ausgangsposition zurückkehrt, wobei der Kontakt zwischen der Oberfläche und dem einen Zahn bewirkt, dass die Schaltklinke um einen vorbestimmten Abstand von der Schaltwelle weggleitet.

9. Gangwahlmechanismus nach Anspruch 7 oder 8, welcher ferner Folgendes umfasst:
mindestens eine Feder (134), die wirkungsmäßig mit der Schaltklinke (131) verbunden ist, um die Schaltklinke bei Abschluss des Gangwechselvorgangs in die Ausgangsposition zurückzubringen.

10. Gangwahlmechanismus nach einem der Ansprüche 1 bis 9, wobei die Schaltklinke (231) eine darin ausgebildete Öffnung (233) aufweist, wobei die drehbare Gangwechselplatte innerhalb der Öffnung angeordnet ist.

11. Gangwahlmechanismus nach Anspruch 10, wobei die Schaltklinke (232) ein Paar Finger (234) aufweist, wobei das Paar Finger auf der Schaltklinke derart angeordnet ist, dass sich die Finger auf gegenüberliegenden Seiten von zwei benachbarten Zähnen in Ruhestellung befinden, wobei das Paar Finger sich in die Öffnung (233) erstreckt.

12. Gangwahlmechanismus nach einem der Ansprüche 1 bis 11, wobei die Gangwechselplatte (112) aus Metall, vorzugsweise gesintertem Metall gebildet ist.

13. Gangwahlmechanismus nach einem der Ansprüche 1 bis 12, wobei die Schaltwelle (132) eine Längsachse umfasst und wobei mindestens ein Teil der Schaltklinke (131) in Bezug auf die Schaltwelle (132) in einer Richtung beweglich ist, die wenigstens teilweise zur Längsachse der Welle senkrecht ist.

14. Gangwahlmechanismus nach einem der Ansprüche 1 bis 8, wobei die Schaltwelle (132) eine Längsachse umfasst und wobei mindestens ein Teil der Schaltklinke (131) in Bezug auf die Schaltwelle (132) in einer Richtung beweglich ist, die mindestens teilweise zur Längsachse der Welle senkrecht ist und wobei die Bewegung der Schaltklinke (131) in Bezug auf die Schaltwelle (132) durch mindestens eine Feder vorgespannt ist.

## Revendications

1. Mécanisme sélecteur de vitesses (100) pour réaliser une opération de changement de vitesse, comprenant :
un mécanisme d'indexage,
un cliquet sélecteur (13) monté en pivotement autour d'un arbre sélecteur (132) ; et **caractérisé par**
une plaque rotative de changement de vitesse (112) présentant une pluralité de dents s'étendant radialement autour de sa périphérie, chacune de la pluralité de dents (114) présentant une pointe extérieure et une section de base interne, tandis qu'au moins une section du cliquet sélecteur (131) est apte à s'engager sélectivement dans au moins une de la pluralité de dents (114) pendant l'opération de changement de vitesse, que le cliquet sélecteur (131) s'engage dans une de la pluralité de dents dans une zone adjacente à la pointe extérieure au début de l'opération de changement de vitesse et que le cliquet sélecteur s'engage dans une de la pluralité de dents (114) dans une zone adjacente à la section de base interne à la fin de l'opération de changement de vitesse.

2. Mécanisme sélecteur de vitesses selon la revendication 1, dans lequel ledit mécanisme d'indexage comprend une plaque rotative d'indexage (110), cette plaque rotative d'indexage présentant une pluralité de retraits (113) formés sur sa périphérie extérieure, tandis que la pluralité de retraits correspondent à une position parmi une position neutre et une pluralité de positions de vitesses, la plaque rotative de passage de vitesses (112) et que la plaque rotative d'indexage (110) tourne autour d'un axe commun (11), la plaque rotative d'indexage et la plaque rotative de passage de vitesses étant disposées de manière à ce que chaque retrait (113) supporte une paire de dents positionnées sur des côtés opposés du retrait.

3. Mécanisme sélecteur de vitesses selon la revendication 1 ou 2, comprenant en outre :
un levier pivotant d'indexage (120), le levier d'indexage étant positionné dans un de la pluralité de retraits lorsque l'opération de changement de vitesse est terminée.

4. Mécanisme sélecteur de vitesses selon une des revendications 1 à 3, dans lequel le cliquet sélecteur (131) comporte une paire de doigts (234), la paire de doigts étant disposée sur le cliquet sélecteur de manière à ce que les doigts se trouvent sur des côtés opposés de deux dents adjacents en position de non-fonctionnement.

5. Mécanisme sélecteur de vitesses selon la revendication 4, dans lequel un des doigts (234) s'engage dans une dent (114) de la pluralité de dents dans la zone adjacente à la pointe extérieure au début de l'opération de changement de vitesse et le doigt s'engage dans une dent dans la zone adjacente à la section de base interne à la fin de l'opération de changement de vitesse.

6. Mécanisme sélecteur de vitesses selon une des revendications 1 à 5, dans lequel le cliquet sélecteur (131) est monté de manière à pouvoir pivoter et coulisser sur l'arbre sélecteur (132).

7. Mécanisme sélecteur de vitesses selon la revendication 6, dans lequel le cliquet sélecteur (131) pivote autour de l'arbre sélecteur (132) pendant l'opération de changement de vitesse, le cliquet sélecteur pivotant et coulissant sur une distance prédéterminée une fois que l'opération de changement de vitesse est terminée, de sorte que le cliquet sélecteur retourne à sa position initiale.

8. Mécanisme sélecteur de vitesses selon la revendication 6 ou 7, dans lequel le cliquet sélecteur (231) comporte une paire de doigts (234), chacun des doigts incluant une surface apte à toucher une des dents une fois que l'opération de changement de vitesse est terminée lorsque le cliquet sélecteur retourne à sa position initiale, tandis que le contact entre la surface et la dent fait coulisser le cliquet sélecteur sur une distance prédéterminée en s'éloignant de l'arbre sélecteur.

9. Mécanisme sélecteur de vitesses selon la revendication 7 ou 8, comprenant en outre :
au moins un ressort (134) couplé opérationnellement au cliquet sélecteur (131) pour faire retourner le cliquet sélecteur à sa position initiale une fois que l'opération de changement de vitesse est terminée.

10. Mécanisme sélecteur de vitesses selon une des revendications 1 à 9, dans lequel le cliquet sélecteur (131) comprend une ouverture (233) pratiquée dedans, la plaque rotative de changement de vitesse étant positionnée dans cette ouverture.

11. Mécanisme sélecteur de vitesses selon la revendication 10, dans lequel le cliquet sélecteur (232) comprend une paire de doigts (234), la paire de doigts étant disposée sur le cliquet sélecteur de manière à ce que les doigts se trouvent sur des côtés opposés de deux dents adjacentes en position de non-fonctionnement, tandis que la paire de dents s'étend vers l'intérieur de l'ouverture (233).

12. Mécanisme sélecteur de vitesses selon une des revendications 1 à 11, dans lequel la plaque de changement de vitesse (112) est en métal, de préférence en métal fritté.

13. Mécanisme sélecteur de vitesses selon une des revendications 1 à 12, dans lequel l'arbre sélecteur (132) comprend un axe longitudinal et dans lequel au moins une partie du cliquet sélecteur (131) est mobile par rapport à l'arbre sélecteur (132) dans un sens qui est au moins partiellement perpendiculaire à l'axe longitudinal de l'arbre.

14. Mécanisme sélecteur de vitesses selon une des revendications 1 à 8, dans lequel l'arbre sélecteur (132) comprend un axe longitudinal et dans lequel au moins une partie du cliquet sélecteur (131) est mobile par rapport à l'arbre sélecteur (132) dans un sens qui est au moins partiellement perpendiculaire à l'axe longitudinal de l'arbre et dans lequel le mouvement du cliquet sélecteur (134) par rapport à l'arbre sélecteur (132) est biaisé par au moins un ressort.
